# EUROPEAN PATENT APPLICATION

(11) **EP 1 840 696 A1**
(43) Date of publication of application: **03.10.2007**
(21) Application number: 06251720.6
(22) Date of filing: 29.03.2006
(51) Int. Cl.: G06F 1/16, G06F 3/033

(54) **Viewing device**

(71) Applicant: BRITISH TELECOMMUNICATIONS public limited company, London EC1A 7AJ (GB)
(72) Inventor: Dalton, Gary Keith, Woodbridge, Suffolk IP12 1DZ (GB)
(74) Representative: Chabasseur, Vincent Robert

(57) **Abstract**

The present invention relates to a viewing device (10), in particular to a viewing device having a display (12) for displaying electronic images. There is provided a viewing device (10) including: a main body member (16) having a front face (20) and a rear face (24); a display (12) for displaying electronic images; a ball member (14) rotational by mounted between the front face (20) and the rear face (24); and, a sensor circuit (40) for detecting rotational movement of the ball member (14), the sensor circuit (40) being operatively coupled to the display (12) such that the display (12) can be controlled, at least in part, by the rotational movement of the ball member (14), wherein the front face (20) and the rear face (24) each have a respective opening (18,22) through which the ball member (14) can be accessed so as to cause rotational movement of the ball member (14). Because the ball member (14) is accessible from the front (20) as well as the rear (24) of the viewing device (10), the same ball member (14) can be used by a user to control the display (12) in different situations.

## Description

The present invention relates to a viewing device, in particular to a viewing device having a display for displaying electronic images.

In a known hand-held electronic digital device, also referred to as a Personal Digital Assistant or PDA, there is provided a screen display, a memory for storing documents or other image data and a processor for processing the image data so that it can be displayed on the screen. A plurality of control keys, including cursor keys, are also provided on a front face of the PDA to allow control over the data to be displayed. Often, the document represents an image of a larger area than the viewing area of the display. In such situations, the cursor keys allow the user to scroll around the image, so that different parts can be viewed sequentially. In order to provide a more intuitive method of scrolling through the image, it is known to incorporate a roller-ball mouse device in a PDA, arranged such that the roller-ball is accessible through a face of the device. However, such an arrangement is not convenient in some situations.

According to the present invention, there is provided a viewing device including: a main body member having a front face and a rear face; a display for displaying electronic images; a ball member rotationally mounted between the front face and the rear face; and, a sensor circuit for detecting rotational movement of the ball member, the sensor circuit being operatively coupled to the display such that the display can be controlled, at least in part, by the rotational movement of the baii member, wherein the front face and the rear face each have a respective opening through which the ball member can be accessed so as to cause rotational movement of the ball member.

Because the ball member is accessible from the front as well as the rear of the viewing device, the same ball member can be used by a user to control the display in different situations. For example, the viewing device may be moved across a surface with the front face of the device facing away from the surface, whilst the ball member is in frictional engagement with the surface through the opening in the rear face of the device. Alternatively, the ball member may be accessed by a user through the front face whilst the viewing device is held in the palm of the user's hand.

The display will preferably be located on the front face of the viewing device, allowing an image to be viewed as the rear face of the device is moved against a surface.

The rear face will preferably have a substantially planar portion from which the ball member projects. This will more easily allow the ball member to be in frictional engagement with an engaging surface that is flat, for example a table top surface, whilst the viewing device is moved about the engaging surface.

The respective opening of the front and rear faces will preferably be substantially aligned, making it easily for the ball member to be rotationally mounted between the font and rear faces.

Preferably, the viewing device will include a sensor circuit arranged to sense the rotational movement of the roller ball, and to provide sensor signals indicative of said movement. The sensor signals can then be translated into displacement vector signals representative of the relative movement between the viewing device and an engaging surface in frictional engagement applicable with the ball member, the relative movement being in the plane of the surface. The displacement signals may be used in a first mode of operation to control the position of a cursor or otherwise select a region of an image displayed on the display. In a second mode of operation, the displacements signals may be used to scroll through an image.

The invention will now be further described, by way of example, with reference to the following drawings in which:
Figure 1 is a front elevation of a viewing device according to the present invention;
Figure 2 is a side elevation of the device of Figure 1;
Figure 3 shows schematically functionally elements of the viewing device of Figure 1;
Figure 4 is an example of a partial image area viewable using the viewing device; and,
Figure 5 is a perspective view of an exemplary device when in use by a user.

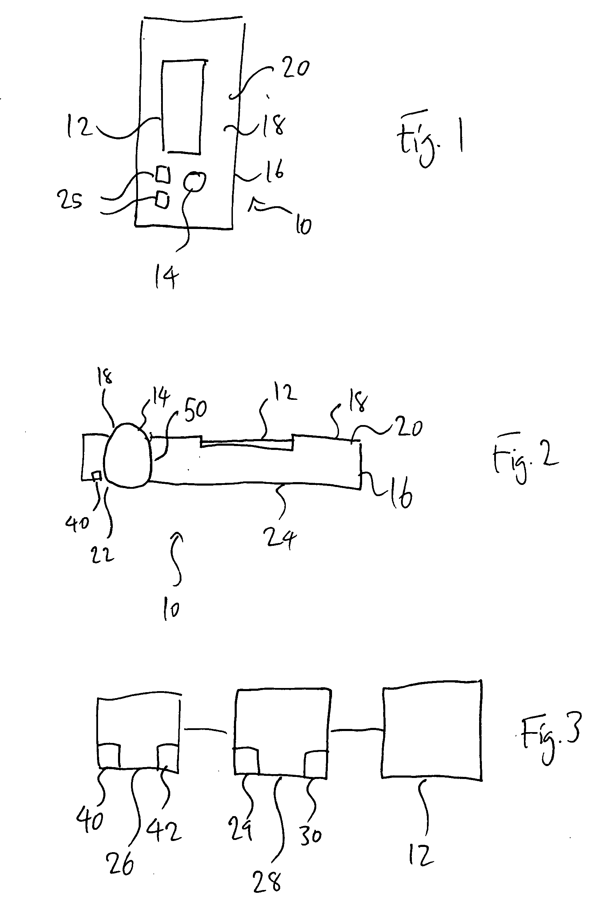

Figure 1 shows a viewing device 10 having a display 12 for viewing electronic images, and a roller ball 14 for allowing a user to navigate one or more images on the display by rotating the roller ball. To navigate an image on the display, a user will rotate the roller ball by bringing the roller ball into frictional engagement with a surface and moving the engaged surface relative to viewing device.

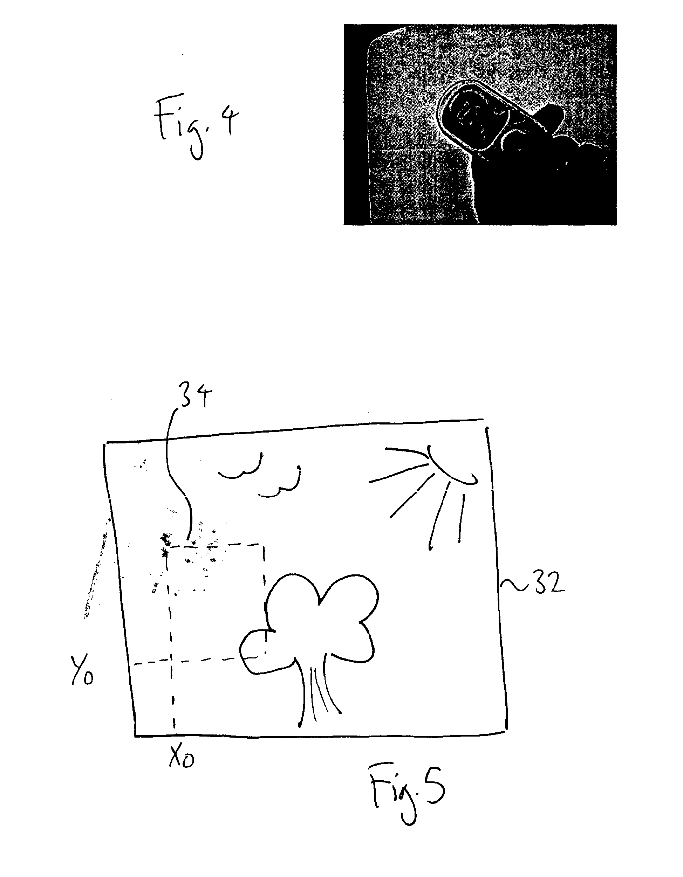

The viewing device has a housing 16 in which the roller ball 14 is rotationally mounted. As can be seen more clearly from Figure 2, which is a side view of the viewing device 10, the housing has a first opening 18 located on a front face thereof and a second opening 22 located on a rear face 24 of the housing, each opening being substantially circular. The roller ball 14 is arranged between the front and rear faces 20, 24 of the housing 16 such that the roller ball projects through each of the first and second openings. As a result of the openings, the roller ball 14 can be accessed in use from the front as well as the rear of the viewing device. The display 12, here an LCD panel display, is mounted behind a window in the front face of the housing 18. A plurality of control keys 25 are also provided on the front face for a user to input or select data or otherwise control the viewing device.

The roller ball 14 is substantially spherical and is retained in the housing 16 such that its rotational axis itself is able to rotate. That is, the axis of rotation of the roller ball can move substantially freely so as to assume different orientations, as is the case with the ball of a conventional "mouse" device. A plurality of bearings (not shown) may be used to retain the roller ball in position within the housing. Alternatively or in addition, the roller ball may bear against the circular respective edges of the openings 18,20, the edges being coated with a low friction material to allow movement of the roller ball.

With reference to Figure 3, the movement of the roller ball 14 is sensed by a sensor circuit 26, which generates electrical displacement signals indicative of the movement of the surface engaging the roller ball relative to the viewing device. The sensor circuit includes a movement sensor 40 mounted by the surface 50 of the roller ball 14. The movement sensor 40 is arranged to sense the rotational movement of the ball, and to generate sensor signals in response to the sensed movement. The sensor circuit further includes a sensor processor 42 for interpreting the sensor signals so as to deduce a measure of the extent of the displacement of the engaging surface as well as the direction of the displacement, thereby generating the displacement signals.

The displacement signals are passed to an image controller 28 which controls the image displayed on the display 12. The image controller includes a memory 30 for storing image data representative of one or more images, and a processor 29 for processing the image data. In a first mode of operation, the image controller is configured to display a pointer symbol overlaying a background image on the display 12. In response to displacement signals from the sensor circuit 26, the image controller is configured to generate a new image with the pointer displaced by an amount governed by the displacement signals, in a similar manner to a no mouse device. In this mode, one of the control keys can be used in association with the roller ball so as to select one of a plurality of icons or links in the image of the display, in a similar manner to the "clicking" action of a conventional pointer device.

A second mode of operation relates to a situation in which the image stored in the memory is larger than the viewable area of the display, with the result that only part of the stored image can be displayed at any one time. In this second mode, the image controller 28 operates such that the position in the stored image of the area which being displayed can be changed in dependence on the movement of the roller ball. The operation of the image controller can be understood with reference to Figure 4, in which a stored image 32 is shown (as if it were displayed on a sufficiently large display). There is also shown by a dotted line a smaller area 34, referred to herein as the display area, corresponding to the viewable area of the electronic display 12 of the viewing device 10. Here, the display area is rectangular and has a reference point at the bottom left hand corner with co-ordinates X0, Y0 (relative to the stored image).

In the absence of any displacement signals (for example, when the stored image is initially recalled from memory), the image controller generates an image corresponding to the image portion within the display area 32 (the position of an initial display area may be predetermined according to the information content of the stored image). Upon receiving displacement signals from the sensor circuit 26, the image controller is configured to generate a new viewable image, corresponding to a different display area within the stored image (which normally will overlap the previous display area). That is, if the displacement signals are indicative of a displacement DX, DY, the new display area will be displaced by a vector DX, DY relative to the previous display area shown. In the example of Figure 4, this will result in a new display area with reference point X0+DX,Y0+DY (DY and DX can take negative as well as positive values).

The image controller is configured to update the position of the display area each time the sensed roller ball movement corresponds to an on-screen displacement a single pixel. Thus, continuous rotation of the roller ball will result in a continuous movement through a stored image, allowing a user to scroll through the stored image in a two dimension fashion by rotating the roller ball in a desired direction.

The first and second modes are selectable by a user through the depression of one of the control keys on the front panel of the handset. In either mode, a user can effect the rotation of the roller ball through the front face or through the rear face of the device.

The viewing device is dimensioned so as to be suitable for holding in the hand, in the manner of a hand-held calculator or telephone handset, for example. As viewed from the front, the viewing device has a long axis and a short axis, the display 12 being located forward of the roller ball 14 in the direction of the long axis. A user can thus hold the device towards the end of the device remote from the display, as shown in Figure 5, thereby enabling the user to (a) view the display, whilst (b) manipulating the roller ball by frictionally engaging the roller ball with the thumb. Manipulation of the roller ball in the manner shown in Figure 3 will normally be preferred when the viewing device is operating in the first mode; that is, when the roller ball is controlling the position of a pointer device or other graphical icon on the display.

Alternatively, the viewing device itself may be moved along a preferably stationary surface such as a table top, with the roller ball in frictional engagement with the surface. This will be a particularly convenient way of moving the roller ball when the viewing device is in the second mode of operation. In this situation, the portion of the roller ball projecting from the rear face 24 of the viewing device 10 will be placed against the surface, allowing the display on the opposing face of the viewing device to be visible as the device is being moved.

In the second mode of operation, the image controller 28 is preferably configured such that the displacement DX, DY of the viewable area corresponds to the actual displacement of the viewing device 10 when the device is moved across a surface. This will give the user the impression that the viewing device is a moveable window through which a stationary image behind the window can be seen, areas outside the window remaining obscured.

The viewing device includes a communications module 35 for transmitting and receiving data, in a wireless fashion. Image or other data can then be downloaded from a network over radio, infrared, microwave or other wireless link and stored in the memory 30 of the image controller 28 for later retrieval. For example, data may be downloaded from the internet, the image controller being configured to execute browser software for accessing web pages. The communications module 35 may also include telephony functionality, allowing the viewing device to operate as a mobile or cellular telephone.

The following additional comments are provided.

The emobiment above is a small form factor handheld and desktop mouse-like device with a clickable rollerball interface for navigating content larger than the screen size available. Ordinary phone features are enhanced with web page navigation using the thumb or by placing the device on a flat surface and moving around to navigate virtual page. The device us suitable for all users who like the idea of simple navigation and zooming facility on a small portable device. It acts as a mobile phone. The device is used for a user who wants to replicate information found on a larger display for later viewing in a constrained format when on the move. E.g. a user may download town centre map from mall and view on the device when in another part of town.

## Claims

1. A viewing device including: a main body member having a front face and a rear face; a display for displaying electronic images; a ball member rotationally mounted between the front face and the rear face; and, a sensor circuit for detecting rotational movement of the ball member, the sensor circuit being operatively coupled to the display such that the display can be controlled, at least in part, by the rotational movement of the ball member, wherein the front face and the rear face each have a respective opening through which the ball member can be accessed so as to cause rotational movement of the ball member.

2. A viewing device as claimed in claim 1, wherein the display is located on the front face of the viewing device.

3. A viewing device as claimed in claim 1 or claim 2, wherein the ball member projects from the rear face.

4. A viewing device as claimed in any of the preceding claims, wherein the respective opening of the front and rear faces are preferably substantially aligned.

5. A viewing device as claimed in any of the preceding claims, wherein the device has: a first mode of operation in which the ball member is operable to select a region of an image displayed on the display; and, a second mode of operation in which the ball member is operable to scroll through an image.

6. A viewing device as claimed in claim 5, wherein, the display has a viewing area associated therewith, and, in the second mode of operation at least, the image is larger than the viewing area.

7. A viewing device as claimed in any of the preceding claims, wherein the viewing device is a hand held device.

8. A viewing device as claimed in any of the preceding claims, wherein the viewing device includes telephony functionality.

9. A viewing device as claimed in any of the preceding claims, wherein the respective opening of the front and rear faces are each substantially circular.

10. A method of operating a viewing device as claimed in any of the preceding claims, including the step, in one mode of use, of controlling an image on the display by moving the device about a surface whilst the ball member is in frictional engagement with that surface so as to cause rotational movement of the ball member.
